# EUROPEAN PATENT APPLICATION

(11) **EP 2 543 946 A1**
(43) Date of publication of application: **09.01.2013**
(21) Application number: 11176636.6
(22) Date of filing: 04.08.2011
(51) Int. Cl.: F28D 7/08, F28D 9/00, F28D 15/02, F28F 7/02

(54) **Cryogen heat plate heat exchanger**

(30) Priority: 07.07.2011 US 177605
(71) Applicant: Linde Aktiengesellschaft, 80331 München (DE)
(72) Inventor: Newman, Michael D., Hillsborough, NJ New Jersey 08844 (US)
(74) Representative: Hofmann, Andreas

(57) **Abstract**

In order to avoid problems of safety, temperature control, cool down rates, dual temperature zone control, efficiency and fouling, a heat exchanger (10) is proposed, said heat exchanger (10) comprising
- a first housing (30) disposed in a first atmosphere and having an upstream end (50), a downstream end (52) and an internal space for a cryogenic substance; and
- a heat plate assembly (44, 46) mounted to the first housing (30) and being exposed to the first atmosphere for providing heat transfer at an interface of the first atmosphere and the heat plate assembly (44, 46).

## Description

### Technical field

The present invention relates to the technical field of heat transfer for refrigerating spaces such as for example spaces that are in transit.

### Background of the present invention; prior art

In transit refrigeration (ITR) systems are known and may include cryogenic ITR systems which use known fin tube heat exchangers for liquid nitrogen (N₂) and carbon dioxide (CO₂) chilled or frozen applications, or a snow bunker for solid CO₂ snow (dry ice) chilled or frozen applications.

Such known systems experience problems of safety, temperature control, cool down rates, dual temperature zone control, efficiency and fouling.

### Disclosure of the present invention: object, solution, advantages

Starting from the disadvantages and shortcomings as described above and taking the prior art as discussed into account, an object of the present invention is to further develop a heat exchanger in order to avoid problems of safety, temperature control, cool down rates, dual temperature zone control, efficiency and fouling.

This object is accomplished by a heat exchanger comprising the features of claim 1. Advantageous embodiments and expedient improvements of the present invention are disclosed in the dependent claims.

The present invention uses a cryogen heat plate heat exchanger, comprising
- a first housing disposed in a first atmosphere and having an upstream end, a downstream end and an internal space for a cryogenic substance; and
- a heat plate assembly mounted to the first housing and being exposed to the first atmosphere for providing heat transfer at an interface of the first atmosphere and the heat plate assembly.

According to an advantageous embodiment of the present invention, the internal space comprises a continuous passageway.

According to an expedient embodiment of the present invention, the continuous passageway is arranged in a serpentine pattern within the first housing.

According to a favoured embodiment of the present invention, the heat plate assembly comprises a plurality of heat plates each of which is mounted in different positions on the first housing.

According to a preferred embodiment of the present invention, an air separator is mounted to the upstream end of the first housing and is exposed to the first atmosphere for guiding the first atmosphere to flow over and contact the heat plate assembly.

According to an advantageous embodiment of the present invention, the air separator comprises a triangular cross-section.

According to an expedient embodiment of the present invention,
- an inlet port in communication with the internal space provides the cryogenic substance to the internal space, and
- an outlet port in communication with the internal space for exhausts cryogenic vapor from the internal space.

According to a favoured embodiment of the present invention, an outlet pipe is in communication with the outlet port for the cryogenic vapor.

According to a preferred embodiment of the present invention, an outlet valve is connected to the outlet pipe for controlling exhausting the cryogenic vapor and input of the cryogenic substance to the internal space.

According to an advantageous embodiment of the present invention, at least one fan is associated with the upstream end of the first housing for moving the first atmosphere over the heat plate assembly.

According to an expedient embodiment of the present invention, a sensor is mounted for sensing a temperature of the first atmosphere upstream of the first housing.

According to a favoured embodiment of the present invention, the cryogenic substance comprises a cryogenic liquid.

According to a preferred embodiment of the present invention, the cryogenic liquid is selected from liquid nitrogen (N₂) and liquid carbon dioxide (CO₂).

According to an advantageous embodiment of the present invention,
- a shroud housing has a chamber therein sized and shaped to receive the first housing and optionally the air separator,
- a shroud inlet is disposed proximate the upstream end of the first housing and is in communication with the chamber, and
- a shroud outlet is disposed proximate the downstream end of the first housing and is in communication with the chamber,
with the first housing being disposed in the chamber of the shroud housing for the first atmosphere to be directed, optionally by the air separator, to contact the heat plate assembly.

According to an expedient embodiment of the present invention, at least one mechanical fastener is provided for fastening the first housing to the shroud housing.

According to a favoured embodiment of the present invention, the first housing is constructed as a metallic block in which the internal space is disposed.

According to a preferred embodiment of the present invention, the metallic block comprises metal selected from the group consisting of stainless steel and copper.

The present invention finally relates to the use of at least one heat exchanger as described above in at least one compartment of a truck, of a barge or of a train flatbed.

### Brief description of the drawings

For a more complete understanding of the present inventive embodiments and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of non-limiting example and to the appended drawing figures taken in conjunction with the description of the embodiments, of which:
FIG. 1 shows a side plan view in cross section of a cryogen heat plate heat exchanger embodiment according to the present invention, being operated according to the method of the present invention; and
FIG. 2 shows an isometric perspective, partially transparent view of the embodiment in FIG. 1.

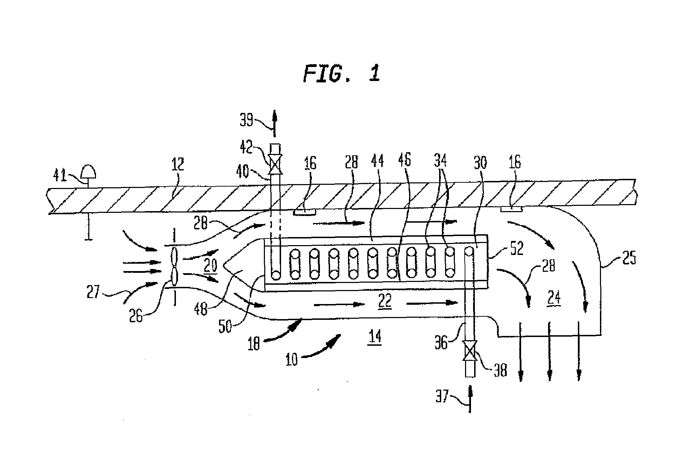

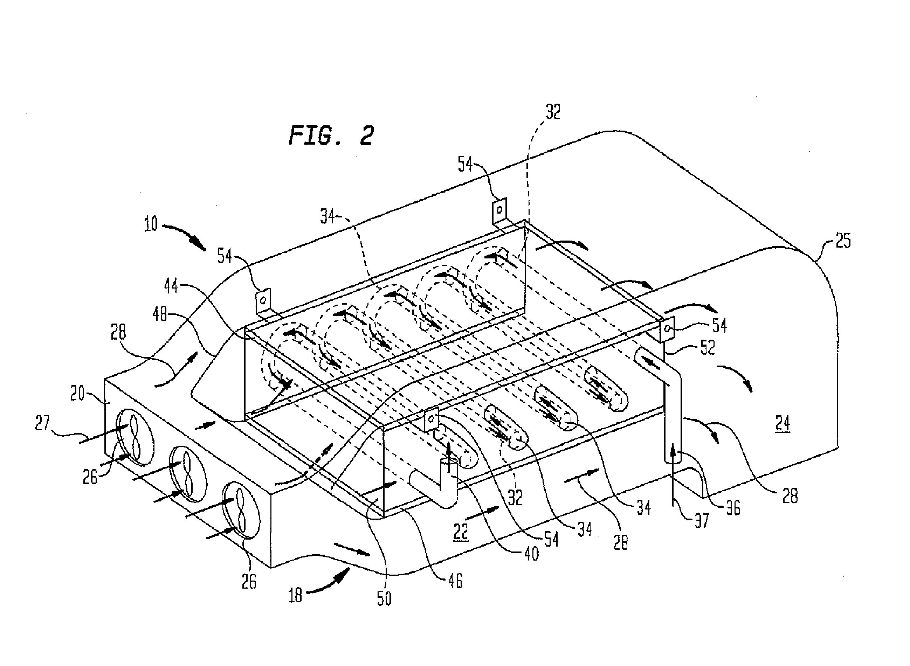

In the drawings, like equipment is labelled with the same reference numerals throughout the description of FIG. 1 and FIG. 2.

### Detailed description of the drawings; best way of embodying the present invention

Heat plates (flat heat pipes) can be used instead of known fin tube heat exchangers to achieve comparable heat transfer with minimal air surface contact area, thereby eliminating issues resulting from snow accumulation on heat exchanger fins.

In addition, the thermal conductivity of heat plates can be adjusted to deliver precise heat transfer rates to the system by using variable conductivity heat plates.

Referring to FIG. 1 and to FIG. 2, a cryogen heat plate heat exchanger is shown generally at 10. The heat exchanger 10 is mounted for use in a compartment having a side wall 12 defining a space 14 in the compartment. The heat exchanger embodiment 10 can be mounted to the side wall 12 by mechanical fasteners 16, such as for example brackets. The side wall 12 may be insulated or vacuum jacketed.

The heat exchanger 10 includes a housing 18 which functions as a shroud. The housing 18 may be referred to herein as a housing 18, shroud or shroud housing. The shroud housing 18 includes an inlet 20 in communication with an internal chamber 22 of the housing, which in turn is in communication with an outlet 24 or discharge end of the housing.

A fan 26 or plurality of fans are mounted at the inlet 20 for drawing air 27 from the space 14 into the inlet 20 and moving the air through the internal chamber 22 for discharge at the outlet 24 into the space 14, as indicated by arrows 28 showing an air flow through the housing 18. The outlet 24 may have a curved or arcuate portion 25 to direct the airflow 28 to a more centralized region of the space 14.

Another housing which may be constructed as a solid conductive metal block 30 is disposed in the internal chamber 22 and exposed to the airflow 28. The metallic block 30 can have a rectangular cross section as shown in FIG. 1 and in FIG. 2, or be formed with a cross section of any other shape.

Copper is one type of material which may be used for forming the metallic block 30, by way of example only, as other metals or alloys may be used, provided they have sufficient heat transfer capability. An internal area of the block 30 is formed with a plurality of bores or passages 32 as shown in particular in FIG. 2. The plurality of passages form a continuous internal flow path in a serpentine pattern within the block 30.

Tubes 34 interconnect adjacent ones of the plurality of passages 32, thereby providing for the continuous internal flow path. It is possible from the construction of the metallic block 30 that the tubes 34 are readily observable if for example the shroud housing 18 is made from transparent material or if said metallic block 30 is removed from said chamber 22 of the shroud housing, thereby providing an indication of the plurality of passages 32 within the block 30.

Liquid cryogen, such as liquid nitrogen (N₂) or liquid carbon dioxide (CO₂), is provided as indicated by arrow 37 through a cryogen inlet pipe 36 in communication with one of the passages 32 in the block 30. A modulating type valve 38 may also be installed for use with the inlet pipe 36.

The liquid cryogen enters one end of the block 30 and is transferred through the internal flow path to an opposite or terminating end of the flow path where it is discharged as a cryogenic gas or vapor 39 through the cryogen vapor outlet pipe 40. The cryogen vapor outlet pipe 40 may include a modulating type valve 42 which is used to control the mass flow rate of cryogen flowing through the block 30.

A heat plate assembly includes a heat plate 44 fabricated from for example copper or stainless steel and is disposed at one side, such as for example a top or an upper side, of the metallic block 30. The heat plate 44 is exposed to the airflow 28 in the internal chamber 22.

A heat plate 46 fabricated from for example copper or stainless steel is mounted to another side, such as for example a bottom or opposed side, of the metallic block 30 and is exposed as well to the airflow 28 within the internal chamber 22.

An airflow separator 48 or airfoil is disposed at an upstream end 50 of the metallic block 30 proximate the inlet 20. The air foil is disposed such that it is positioned at the leading edge or the upstream end 50 of the metallic block 30 to separate the airflow 28 at the inlet 20, such that approximately fifty percent (50%) of the airflow moves along and contacts the heat plate 44, while approximately the other fifty percent (50%) of the airflow 28 moves along and contacts the heat plate 46 at the bottom of the metallic plate 30. Heat flux or heat transfer occurs at an interface at the heat plates 44, 46 and the airflow 28.

The airflow separator 48 may have a triangular shape cross-section for example, to bifurcate the airflow 28 to move along upper and lower sides of the metallic block 30, or alternatively have a frustoconical shape to guide the airflow 28 along all sides of the block 30.

In most constructions of the heat exchanger apparatus 10, the internal chamber 22 is sized and shaped so that the metallic block 30 takes up or uses most of the volume of said chamber, except where the heat plates 44, 46 are located so that the air flow 28 is substantially directed along sides of the metallic block where the heat plates are exposed for contact with said air flow.

The heat from the warm air drawn in by the fans 26 is transferred via the heat plates 44, 46 to the colder solid metallic block 30 in which is contained a flow of liquid cryogen 37. The thermal conductivity of the heat plates 44, 46 can be adjusted by selecting different sizes of heat plates or different materials from which the heat plates are fabricated, and/or adjusting the fan speed to match the required refrigeration load of the heat exchanger embodiment 10.

In addition, variable conductivity heat plates can be used for the plates 44, 46 for active control of the heat flux or heat transfer to provide a wide range of heat flux and temperature gradients at the plates and to the airflow 28. Warmer cryogen vapor or gas is discharged from the cryogen vapor outlet pipe 40 for subsequent use or exhaust to the external atmosphere.

The airflow 27 introduced at the inlet 20 is substantially cooled upon exposure to the heat plates 44, 46 for discharge at the outlet 24 downstream 52 of the metallic block 30. The airflow 28 cools at the interface of said airflow and the heat plates 44, 46. A sensor 41 senses temperature of the space at least upstream of the shroud housing 18.

The metallic block 30 can be mounted in the internal chamber 22 by use of mechanical fasteners 54 or brackets connecting the metallic block to the housing 18.

The cryogen heat plate heat exchanger 10 can be used for example in the compartments of trucks, barges and train flatbeds.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: heat exchanger or heat exchanger apparatus, in particular cryogen heat plate heat exchanger
- 12: side wall of compartment
- 14: space in compartment
- 16: mechanical fastener, in particular bracket
- 18: housing, in particular shroud or shroud housing
- 20: inlet of housing 18
- 22: chamber, in particular internal chamber, of housing 18
- 24: discharge end or outlet of housing 18
- 25: curved or arcuate portion of outlet or discharge end 24
- 26: fan
- 27: air
- 28: direction of air 27 or flow of air 27 or airflow through housing 18
- 30: first housing, in particular block, for example metallic block, such as solid conductive metal block
- 32: bore or passage or passageway, in particular continuous passageway, of first housing 30
- 34: tube
- 36: inlet pipe, in particular cryogen inlet pipe
- 37: direction or flow of cryogen substance, in particular of liquid nitrogen (N₂) or of liquid carbon dioxide (CO₂)
- 38: inlet valve, in particular of modulating type
- 39: cryogenic gas or cryogen vapor
- 40: outlet pipe, in particular cryogenic gas outlet pipe or cryogenic vapor outlet pipe
- 41: sensor
- 42: outlet valve, in particular of modulating type
- 44: heat plate, in particular first heat plate of heat plate assembly 44, 46
- 46: heat plate, in particular second heat plate of heat plate assembly 44, 46
- 48: air separator or airflow separator or airfoil
- 50: leading edge or upstream end of first housing 30
- 52: downstream end of first housing 30
- 54: mechanical fastener, in particular bracket

## Claims

1. A heat exchanger (10), comprising
- a first housing (30) disposed in a first atmosphere and having an upstream end (50), a downstream end (52) and an internal space for a cryogenic substance; and
- a heat plate assembly (44, 46) mounted to the first housing (30) and being exposed to the first atmosphere for providing heat transfer at an interface of the first atmosphere and the heat plate assembly (44, 46).

2. The heat exchanger according to claim 1, wherein the internal space comprises a continuous passageway (32), in particular being arranged in a serpentine pattern within the first housing (30).

3. The heat exchanger according to claim 1 or 2, wherein the heat plate assembly comprises a plurality of heat plates (44, 46) each of which is mounted in different positions on the first housing (18).

4. The heat exchanger according to at least one of claims 1 to 3, further comprising an air separator (48), in particular comprising a triangular cross-section, with said air separator (48) being mounted to the upstream end (50) of the first housing (30) and being exposed to the first atmosphere for guiding the first atmosphere to flow over and contact the heat plate assembly (44, 46).

5. The heat exchanger according to at least one of claims 1 to 4, further comprising
- an inlet port in communication with the internal space for providing the cryogenic substance to the internal space, and
- an outlet port in communication with the internal space for exhausting cryogenic vapor from the internal space.

6. The heat exchanger according to claim 5, further comprising an outlet pipe (40) in communication with the outlet port for the cryogenic vapor.

7. The heat exchanger according to claim 6, further comprising an outlet valve (42) connected to the outlet pipe (40) for controlling exhausting the cryogenic vapor and input of the cryogenic substance to the internal space.

8. The heat exchanger according to at least one of claims 1 to 7, further comprising at least one fan (26) associated with the upstream end (50) of the first housing (30) for moving the first atmosphere over the heat plate assembly (44, 46).

9. The heat exchanger according to at least one of claims 1 to 8, further comprising a sensor (41) mounted for sensing a temperature of the first atmosphere upstream of the first housing (30).

10. The heat exchanger according to at least one of claims 1 to 9, wherein the cryogenic substance comprises a cryogenic liquid, in particular being selected from liquid nitrogen (N₂) and liquid carbon dioxide (CO₂).

11. The heat exchanger according to at least one of claims 1 to 10, further comprising
- a shroud housing (18) having a chamber (22) therein sized and shaped to receive the first housing (30) and optionally the air separator (48) according to claim 4,
- a shroud inlet (20) disposed proximate the upstream end (50) of the first housing (30) and in communication with the chamber (22), and
- a shroud outlet (24) disposed proximate the downstream end (52) of the first housing (30) and in communication with the chamber (22), the first housing (30) disposed in the chamber (22) of the shroud housing (18) for the first atmosphere to be directed, optionally by the air separator (48) according to claim 4, to contact the heat plate assembly (44, 46).

12. The heat exchanger according to claim 11, further comprising at least one mechanical fastener (54) for fastening the first housing (30) to the shroud housing (18).

13. The heat exchanger according to at least one of claims 1 to 12, wherein the first housing (30) is constructed as a metallic block in which the internal space is disposed.

14. The heat exchanger according to claim 13, wherein the metallic block comprises metal selected from the group consisting of stainless steel and copper.

15. Use of at least one heat exchanger (10) according to at least one of claims 1 to 14 in at least one compartment of a truck, of a barge or of a train flatbed.
